# EUROPEAN PATENT SPECIFICATION

(11) **EP 3 109 740 B1**
(45) Date of publication and mention of the grant of the patent: **29.05.2019**
(21) Application number: 16175410.6
(22) Date of filing: 21.06.2016
(51) Int. Cl.: G06F 3/041, G06F 3/044, G06F 3/0362, G06F 3/0354

(54) **INPUT DEVICE**
EINGABEVORRICHTUNG
DISPOSITIF D'ENTRÉE

(30) Priority: 24.06.2015 JP 2015126965
(43) Date of publication of application: 28.12.2016
(73) Proprietor: Alps Alpine Co., Ltd., Tokyo 145-8501 (JP)
(72) Inventor: Abe, Shinya, Tokyo, 145-8501 (JP)
(74) Representative: Schmitt-Nilson Schraud Waibel Wohlfrom Patentanwälte Partnerschaft mbB

(56) References cited:
- EP-A2- 2 752 742
- JP-A- 2014 229 223
- US-A1- 2011 095 991
- US-A1- 2013 215 057

## Description

### BACKGROUND OF THE INVENTION

### 1. Field of the Invention

The present invention relates to an input device that is provided with an operation member having a capacitance sensor and a conductor portion surrounding the capacitance sensor and is capable of detecting a hand that touches the conductor portion.

### 2. Description of the Related Art

An invention relating to an input device mounted on a vehicle is described in Japanese Unexamined Patent Application Publication No. 2014-229223. An operation body that can be rotation-operated and that has an upper surface portion and a side wall portion is provided in this input device.

A capacitance sensor is provided on the upper surface portion of the operation body, and a floating conductor portion is provided in the side wall portion.

A capacitive sensor includes a plurality of first electrode patterns extending in a straight line in a Y-direction, and a plurality of second electrode patterns extending in a straight line in an X-direction.

This input device is driven in a proximity scan mode and a normal scan mode . In the proximity scan mode, it is detected whether a floating conductor portion is gripped with a finger, and in the normal scan mode, a contact position is detected as coordinate information when a finger touches an upper surface.

In the proximity scan mode, one of two electrodes located at both ends in the X-direction in the first electrode pattern is used as a driving electrode, and the other electrode is used as a detection electrode. In this proximity scan mode, when a finger touches an upper surface portion, when the finger touches a floating conductor portion from a lateral direction, and when a palm approaches from an upward direction and the conductor portion is gripped with a plurality of fingers, levels of the detection signal are different. Therefore, it is determined how an operation member is operated by hand by comparing the level of the detection signal with a threshold value.

In the input device described in Japanese Unexamined Patent Application Publication No. 2014-229223, since the driving electrode and the detection electrode are arranged apart in the X-direction in the proximity scan mode, detection sensitivity is weak. Accordingly, it is very difficult to accurately determine a difference between levels of the detection signal based on a threshold value.

In the input device, the driving voltage applied to the driving electrode can be increased or the sensitivity can be improved by increasing the number of driving electrodes. However, in this case, radiation noise generated from the driving electrode increases and easily affects other electronic devices.

US 2013/0215057 A1 discloses an embedded touch screen, including: a first substrate; a second substrate including: scanning signal lines extending in a first direction; video signal lines extending in a second direction; a plurality of pixels each including a pixel electrode connected to corresponding one of the video signal lines via a switching element connected to corresponding one of the scanning signal lines; and a common electrode; a liquid crystal layer; an application circuit for applying an alternating signal to a plurality of excitation electrodes; a detection circuit for detecting a signal excited on a plurality of detection electrodes each arranged adjacent to each of the plurality of excitation electrodes; and a scanning circuit for scanning at least one of each of the plurality of excitation electrodes and each of the plurality of detection electrodes at least in the second direction.

JP 2014 229223 describes an operated object which has a side wall surface which is placed at the periphery of a top surface and the aforementioned top surface. A capacitance sensor is arranged on the back side of the aforementioned top surface, and a detection area is opposing with the aforementioned top surface. A control part is provided which generates a detecting signal based on the capacity variation of the aforementioned capacitance sensor.

### SUMMARY OF THE INVENTION

The present invention has been made to solve the conventional problems described above, and provides an input device capable of detecting a hand that touches a conductor portion with high sensitivity and suppressing occurrence of radiation noise.

According to the present invention, there is provided an input device according to claim 1. Further embodiments of the invention are defined by claims 2-6.

### BRIEF DESCRIPTION OF THE DRAWINGS

Fig. 1 is a block diagram illustrating an entire structure of an input device of an embodiment of the present invention;
Fig. 2A is a perspective view illustrating an operation in which a conductor portion is gripped, and Fig. 2(B) is a perspective view illustrating an operation in which a finger touches an operation surface in which a capacitance sensor is provided;
Fig. 3 is a plan view illustrating an arrangement of a Y electrode group of the capacitance sensor;
Fig. 4 is a plan view illustrating an arrangement of an X electrode group of the capacitance sensor;
Fig. 5 is a diagram illustrating waveforms of a driving voltage and a detection output;
Fig. 6A is an illustrative diagram illustrating capacitive coupling between electrodes of a Y-electrode group, and Fig. 6B is a diagram illustrating an operation when a hand touches a conductor portion; and
Fig. 7 is a diagram illustrating an operation when a finger touches an operation surface having a capacitance sensor.

### DESCRIPTION OF THE PREFERRED EMBODIMENTS

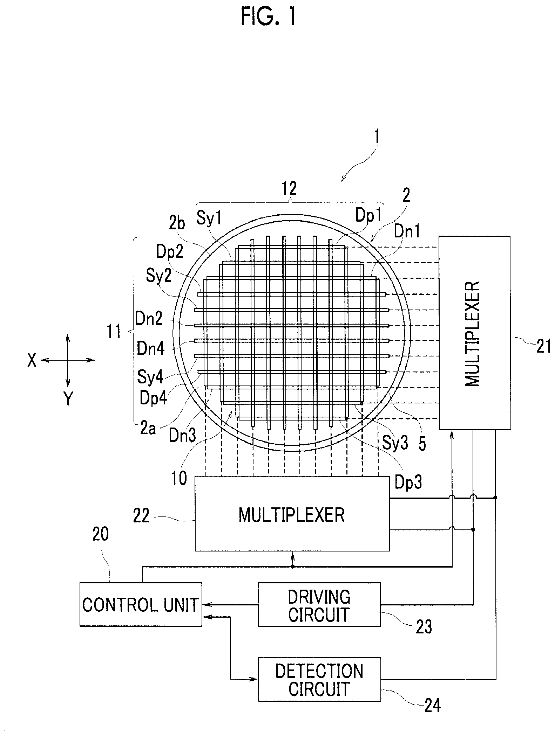

An input device 1 according to an embodiment of the present invention illustrated in Fig. 1 is used for an operation unit provided in an indoor space of a vehicle such as a car, an operation unit of various electronic devices, or an operation unit of an industrial device.

### Structure of input device

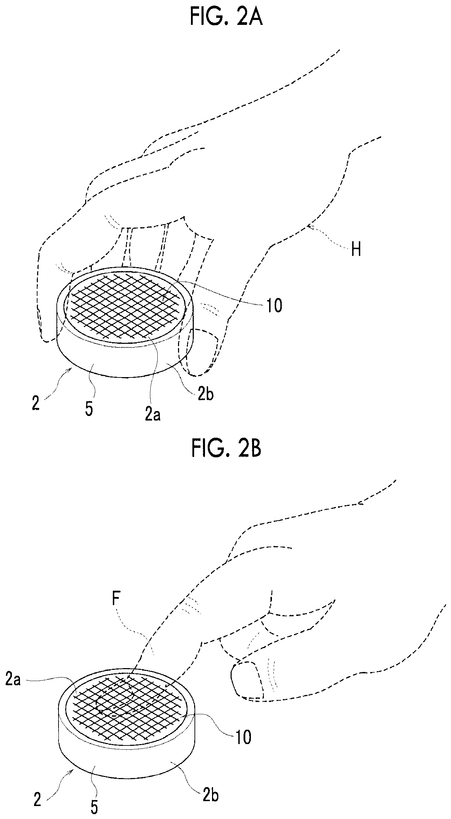

An operation member 2 is provided in the input device 1. As illustrated in Figs. 1 and 2, the operation member 2 has a disk-shape, and is formed of an electrically insulating synthetic resin. An upper surface of the operation member 2 is an operation surface 2a, and a capacitance sensor 10 is installed in the operation surface 2a.

A side surface 2b of the operation member 2 is a cylindrical surface, and a conductor portion 5 is provided in the side surface 2b. The conductor portion 5 is formed of, for example, a metal plate or a metal plating layer, or is formed of a conductive resin material. The conductor portion 5 is insulated from the capacitance sensor 10, and is in an electrically floating state. In the operation member 2 illustrated in Figs. 1 and 2, the conductor portion 5 is continuously formed to surround the entire periphery of the operation surface 2a and the capacitance sensor 10. However, the conductor portion 5 may be partially or intermittently provided around the capacitance sensor 10.

In the input device 1, a rotation detection member such as a rotary encoder, a rotary switch, or a rotary variable resistor can be operated by holding and rotating the operation member 2 by hand, as illustrated in Fig. 2A. Further, it can be detected that a finger F approaches or touches the operation surface 2a using the capacitance sensor 10 provided in the operation member 2, and a position on the operation surface 2a that the finger F touches can be identified, as illustrated in Fig. 2B.

As illustrated in Fig. 1, in the capacitance sensor 10, a Y electrode group 11 and an X electrode group 12 are formed in a circular insulating substrate, and the insulating substrate is installed in the operation surface 2a of the operation member 2. A plurality of electrodes constituting the Y electrode group 11 are formed to extend in a straight line in a Y-direction at intervals in an X-direction. A plurality of electrodes constituting the X electrode group 12 is formed to extend in a straight line in the X-direction at intervals in the Y-direction. The electrodes constituting the Y electrode group 11 and the electrodes constituting the X electrode group 12 are insulated from each other. Further, these electrodes are covered with an insulating layer, and the insulating layer appears in a surface of the operation surface 2a of the operation member 2.

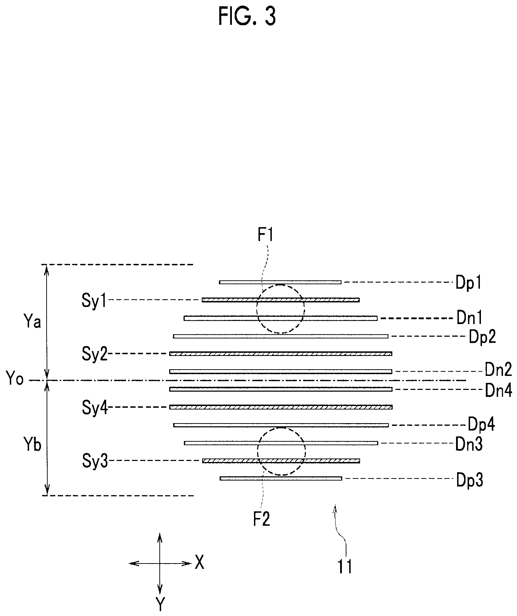

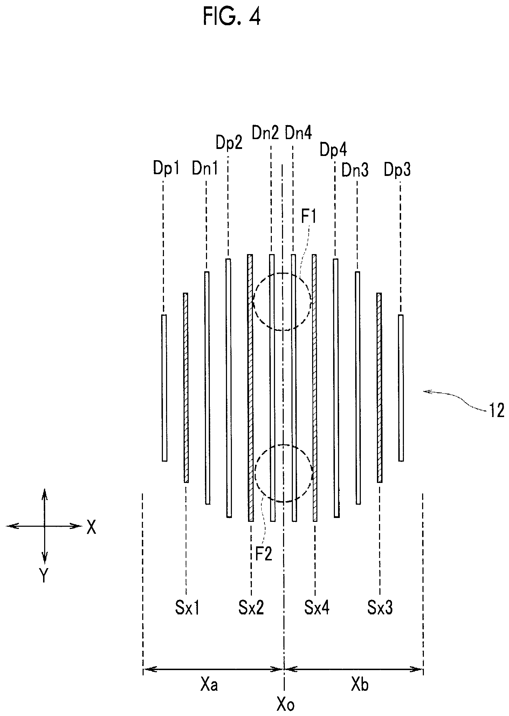

The Y electrode group 11 is illustrated in Fig. 3, and the X electrode group 12 is illustrated in Fig. 4.

In the Y electrode group 11 illustrated in Fig. 3, a direction in which the respective electrodes extend is an X-direction, and a Y-direction perpendicular to the X-direction is the arrangement direction of the electrodes.

In Fig. 3, a half group of the Y electrode group 11 located on the illustrated upper side with respect to a center line Y0 is indicated as a half electrode group Ya, and a half group of the Y electrode group 11 located on the illustrated lower side is indicated as a half electrode group Yb. As also illustrated in Fig. 1, in a half electrode group Ya, a first driving electrode Dp1, a first detection electrode Sy1, a first reverse phase driving electrode Dn1, a second driving electrode Dp2, a second detection electrode Sy2, and a second reverse phase driving electrode Dn2 are arranged in this order toward the center line Y0 from an illustrated upper position closest to the conductor portion 5 in the arrangement direction (Y-direction).

In the half electrode group Ya and the half electrode group Yb, an arrangement of the respective electrodes is line-symmetrical vertically with respect to the center line Y0. As illustrated in Fig. 1, in the half electrode group Yb on the lower side, a third driving electrode Dp3, a third detection electrode Sy3, a third reverse phase driving electrode Dn3, a fourth driving electrode Dp4, a fourth detection electrode Sy4, and a fourth reverse phase driving electrode Dn4 are arranged in this order toward the center line Y0 from an illustrated lower position closest to the conductor portion 5 in the arrangement direction (Y-direction).

In the X electrode group 12 illustrated in Fig. 4, a half group of the X electrode group 12 located on the illustrated left side with respect to a center line X0 is indicated as a half electrode group Xa, and a half group of the X electrode group 12 located on the illustrated right side is indicated as a half electrode group Xb. In the half electrode group Xa and the half electrode group Xb, an arrangement of the respective electrodes is line-symmetrical horizontally with respect to the center line X0.

In the X electrode group 12, a direction in which each electrode extends is a Y-direction, and an arrangement direction of the electrodes is an X-direction.

An arrangement of the respective electrodes of the X electrode group 12 illustrated in Fig. 4 is the same as that of the Y electrode group 11 illustrated in Fig. 3 rotated 90 degrees counterclockwise. In the half electrode group Xa, the first driving electrode Dp1, the first detection electrode Sx1, the first reverse phase driving electrode Dn1, the second driving electrode Dp2, the second detection electrode Sx2, and the second reverse phase driving electrode Dn2 are arranged in this order toward the center line X0 from an illustrated left position closest to the conductor portion 5.

In the half electrode group Xb on the right side, the third driving electrode Dp3, the third detection electrode Sx3, the third reverse phase driving electrode Dn3, the fourth driving electrode Dp4, the fourth detection electrode Sx4, and the fourth reverse phase driving electrode Dn4 are arranged
in this order toward the center line X0 from an illustrated right position closest to the conductor portion 5.

As illustrated in Fig. 1, the respective electrodes constituting the Y electrode group 11 are connected to a Y-side multiplexer 21, and the respective electrodes constituting the X electrode group 12 are connected to an X-side multiplexer 22. The Y-side multiplexer 21 and the X-side multiplexer 22 are operated under the control of the control unit 20, and the respective electrodes in the Y electrode group 11 and the X electrode group 12 are selectively connected to the driving circuit 23 and the detection circuit 24 by a switching operation of the multiplexers 21 and 22.

Further, the driving circuit 23 is controlled by the control unit 20, and a detection output obtained by the detection circuit 24 is supplied to the control unit 20.

### Operation

Next, an operation of the input device 1 will be described.

This input device 1 is driven in an "operation identification mode" and a "position identification mode" . In the "operation identification mode" and the "position identification mode", a combination of a connection between each electrode and the driving circuit 23 and a connection between each electrode and the detection circuit 24 is changed through a switching operation of the multiplexers 21 and 22.

In the "operation identification mode", it is identified how the operation member 2 is operated. That is, it is identified whether the conductor portion 5 of the operation member 2 is gripped by hand H as illustrated in Fig. 2A or a finger F touches the operation surface 2a as illustrated in Fig. 2B. In the "operation identification mode", when it is identified that the finger F touches the operation surface 2a as illustrated in Fig. 2B, switching to the "position identification mode" occurs through the control operation of the control unit 20, and then, a position on X-Y coordinates of a point that the finger F touches in the operation surface 2a is detected.

By performing the above control, it is possible to recognize whether an operator tries to grip the operation member 2 with a plurality of fingers and rotation-operate the operation member 2 or tries to perform a coordinate input operation with the finger touching the operation surface 2a.

### Operation identification mode

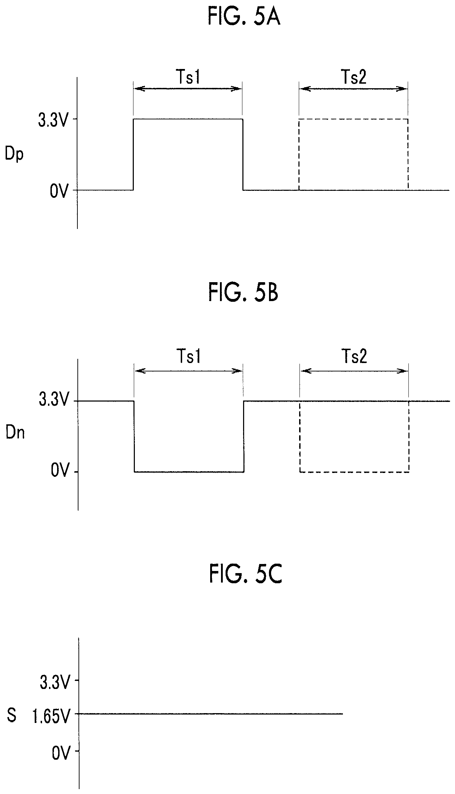

As illustrated in Fig. 5A, in the "operation identification mode", in a scan time Ts1, a positive driving voltage is simultaneously applied to the first driving electrode Dp1, the second driving electrode Dp2, the third driving electrode Dp3, and the fourth driving electrode Dp4 constituting the Y electrode group 11. In the same scan time Ts1, an opposite driving voltage illustrated in Fig. 5B is simultaneously applied to the first reverse phase driving electrode Dn1, the second reverse phase driving electrode Dn2, the third reverse phase driving electrode Dn3, and the fourth reverse phase driving electrode Dn4 constituting the Y electrode group 11.

In the next scan time Ts2 subsequent to the scan time Ts1, the positive driving voltage is simultaneously applied to the first driving electrode Dp1, the second driving electrode Dp2, the third driving electrode Dp3, and the fourth driving electrode Dp4 constituting the X electrode group 12. In the same scan time Ts2, the opposite driving voltage is applied to the first reverse phase driving electrode Dn1, the second reverse phase driving electrode Dn2, the third reverse phase driving electrode Dn3, and the fourth reverse phase driving electrode Dn4 constituting the X electrode group 12.

Here, the driving electrode and the reverse phase driving electrode are only relatively identified, and the driving voltage may be applied oppositely to the above driving voltage . For example, the opposite driving voltage illustrated in Fig. 5B is applied to the driving electrodes Dp1, Dp2, ··· , and the positive driving voltage illustrated in Fig. 5A may be applied to reverse phase driving electrodes Dn1, Dn2, ··· .

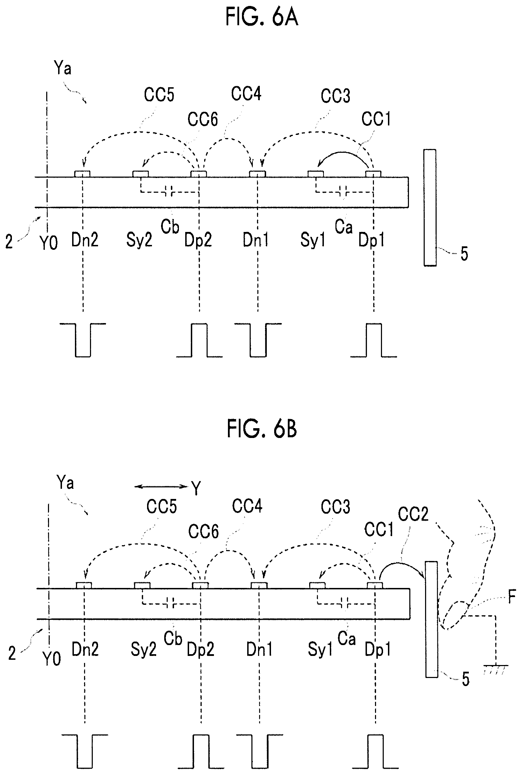

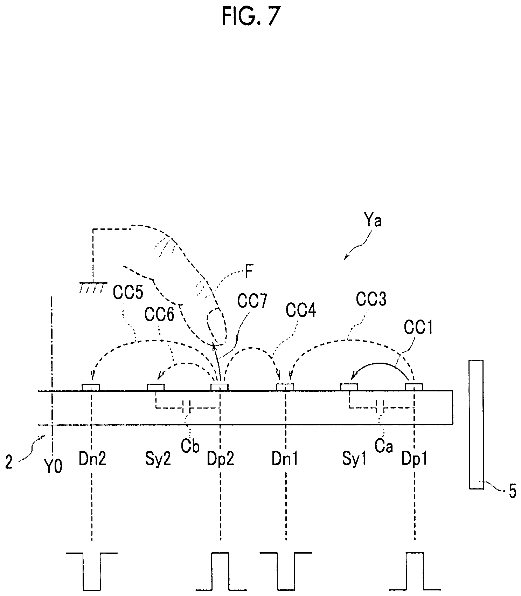

A detection operation in the "operation identification mode" of the input device 1 will be described based on Figs. 6 and 7.

In the half electrode group Ya and the half electrode group Yb of the Y electrode group 11 illustrated in Fig. 3, the arrangements of the electrodes are symmetrical, and the detection operations also appear symmetrically. The half electrode group Xa and the half electrode group Xb of the X electrode group 12 illustrated in Fig. 4 correspond to the half electrode group Ya and the half electrode group Yb of the Y electrode group 11 rotated 90 degrees, and in the Y electrode group 11 and the X electrode group 12, the scan time is different, but the detection operation is substantially the same.

Accordingly, a detection operation in the half electrode group Ya of the Y electrode group 11 will be described based on Figs. 6 and 7 on behalf of the detection operation by the respective half electrodes.

Fig. 6A illustrates a state in which a hand H or a finger F does not approach the operation member 2 . In the "operation identification mode" , in the scan time Ts1, a positive driving voltage is applied to the first driving electrode Dp1, and capacitive coupling CC1 exists between the first driving electrode Dp1 and the first detection electrode Sy1 adjacent thereto.

Since the first driving electrode Dp1 faces the conductor portion 5 that is in a floating state, if the finger F at substantially a ground potential approaches or touches the conductor portion 5 as illustrated in Fig. 6B, charge (positive charge in the embodiment) of the first driving electrode Dp1 is deprived to the conductor portion 5 due to capacitive coupling CC2 between the first driving electrode Dp1 and the conductor portion 5. As a result, the capacitive coupling CC1 between the first driving electrode Dp1 and the first detection electrode Sy1 is weakened, that is, charge accumulated in a capacitor Ca formed between the first driving electrode Dp1 and the first detection electrode Sy1 is reduced, and a voltage between the first driving electrode Dp1 and the first detection electrode Sy1 is reduced. Since a potential of the first driving electrode Dp1 is 3.3 V in the scan time Ts1 as illustrated in Fig. 5A, a potential of the first detection electrode Sy1 rises from an intermediate value illustrated in Fig. 5C. Since the potential (detection output) of the first detection electrode Sy1 is changed, the control unit 20 can detect that the finger touches the conductor portion 5.

Here, if the driving voltage is applied to only the first driving electrode Dp1, radiation noise is generated due to the driving voltage and affects other electronic devices located in the vicinity. Therefore, in the half electrode group Ya, the reverse phase driving electrode Dn1 is provided on the side opposite to the first driving electrode Dp1 across the first detection electrode Sy1, and in the scan time Ts1, driving voltages of opposite phases are applied to the first driving electrode Dp1 and the first reverse phase driving electrode Dn1. Accordingly, it is possible to reduce the radiation noise at a position away from the input device 1.

In the half electrode group Ya, since the first detection electrode Sy1 is provided between the first driving electrode Dp1 and the first reverse phase driving electrode Dn1, it is possible to increase a distance between the first driving electrode Dp1 and the first reverse phase driving electrode Dn1, and to weaken the capacitive coupling CC3. Accordingly, it is possible to strengthen the capacitive coupling CC1 between the first driving electrode Dp1 and the first detection electrode Sy that is adjacent thereto and becomes in a floating state, and to increase a change in a voltage of the capacitor Ca when the finger F approaches or touches the conductor portion 5 even when the first reverse phase driving electrode Dn1 is provided.

Further, in the half electrode group Ya, the second driving electrode Dp2 is provided next to the first reverse phase driving electrode Dn1. In the scan time Ts1, driving voltages of the same phase are applied to the first driving electrode Dp1 and the second driving electrode Dp2. Since capacitive coupling CC4 is formed between the second driving electrode Dp2 and the first reverse phase driving electrode Dn1 if the second driving electrode Dp2 is provided, it is possible to correspondingly weaken the capacitive coupling CC3 between the first driving electrode Dp1 and the first reverse phase driving electrode Dn1. As a result, the capacitive coupling CC1 between the first driving electrode Dp1 and the first detection electrode Sy1 is strengthened. Accordingly, it is possible to increase the change in the voltage in the capacitor Ca when the finger F touches the conductor portion 5 as illustrated in Fig. 6B, and increase sensitivity when it is detected that the finger touches the conductor portion 5.

Further, the second reverse phase driving electrode Dn2 is provided at a position away from the second driving electrode Dp2. In this configuration, the number of driving electrodes Dp1 and Dp2 to which the positive driving voltage is applied is the same as the number of the reverse phase driving electrodes Dn1 and Dn2 to which an opposite driving voltage is applied. Accordingly, it is possible to reduce radiation noise emitted to the outside due to the respective driving voltages.

In the embodiment of the present invention, the first driving electrode Dp1 is arranged at a position facing the conductor portion 5, and the first detection electrode Sy1 and the first reverse phase driving electrode Dn1 are arranged alongside the first driving electrode Dp1, as described above. Accordingly, it is possible to detect that the finger approaches or touches the conductor portion 5 with high sensitivity, and to reduce the radiation noise. Further, by providing the second driving electrode Dp2 and the second reverse phase driving electrode Dn2, it is possible to further increase the detection sensitivity and reduce the radiation noise.

Further, in the capacitance sensor 10, a plurality of sets of combinations of the driving electrode Dp, the detection electrode S, and the reverse phase driving electrodes Dn are provided. Accordingly, it is possible to perform a more detailed detection operation and to identify whether the finger F approaches or touches the conductor portion 5 as illustrated in Fig. 2A or the finger approaches or touches the operation surface 2a as illustrated in Fig. 2B.

As illustrated in Figs. 6 and 7, in the half electrode group Ya of the Y electrode group 11, the second detection electrode Sy2 is provided between the second driving electrode Dp2 and the second reverse phase driving electrode Dn2. Capacitive coupling CC6 is formed between the second driving electrode Dp2 and the second detection electrode Sy2. An arrangement relationship among the second driving electrode Dp2, the second detection electrode Sy2, and the second reverse phase driving electrode Dn2 is the same as an arrangement relationship among the first driving electrode Dp1, the first detection electrode Sy1, and the first reverse phase driving electrode Dn1.

As illustrated in Fig. 1, the first driving electrode Dp1 faces the conductor portion 5 and the Y-direction in its entire length, whereas the second driving electrode Dp2, that is, both end portions in the X-direction thereof faces the conductor portion 5 and the X-direction.

Therefore, as illustrated in Fig. 6B, if the finger F approaches or touches the conductor portion 5, charge of the second driving electrode Dp2 is deprived to the conductor portion 5, the capacitive coupling CC6 between the second driving electrode Dp2 and the second detection electrode Sy2 is degraded, a voltage of a capacitor Cb including the second driving electrode Dp2 and the second detection electrode Sy2 decreases, and a potential of the second detection electrode Sy2 rises.

Thus, if the finger F at substantially the ground potential approaches or touches the conductor portion 5, the potentials (detection outputs) of the first detection electrode Sy1 and the second detection electrode Sy2 are equally changed.

The electrode arrangement of the half electrode group Yb of the Y electrode group 11 is line-symmetrical with respect to the half electrode group Ya, and the third driving electrode Dp3 and the fourth driving electrode Dp4 also face the conductor portion 5. Therefore, as illustrated in Fig. 6B, if the finger F approaches or touches the conductor portion 5, a detection output of the third detection electrode Sy3 is changed equally to the first detection electrode Sy1, and a detection output of the fourth detection electrode Sy4 is changed equally to the second detection electrode Sy2. That is, in the Y electrode group 11, the detection outputs of all of the detection electrodes Sy1, Sy2, Sy3, and Sy4 are equally changed.

As illustrated in Fig. 4, the electrode arrangement of the X electrode group 12 is the same as the Y electrode group 11 rotated 90 degrees, and the first driving electrode Dp1, the second driving electrodes Dp2, the third driving electrode Dp3, and the fourth driving electrode Dp4 in the X electrode group 12 face the conductor portion 5. Accordingly, if the finger F approaches or touches the conductor portion 5 at a point in time at which a positive driving voltage is applied to the driving electrodes Dp1, Dp2, Dp3, and Dp4 of the X electrode group 12 and a reverse driving electrode is applied to the reverse phase driving electrodes Dn1, Dn2, Dn3, and Dn4 in the scan time Ts2 illustrated in Fig. 5, potentials (detection outputs) of the first detection electrode Sx1, the second detection electrode Sx2, the third detection electrode Sx3, and the fourth detection electrode Sx4 in the X electrode group are changed equally to the potentials (detection outputs) of the first detection electrode Sy1, the second detection electrode Sy2, the third detection electrode Sy3, and the fourth detection electrode Sy4 in the Y electrode group.

As described above, if the finger F approaches or touches the conductor portion 5 in the scan time Ts1 and the scan time Ts2, detection outputs of all of the detection electrodes Sy1, Sy2, Sy3, Sy4, Sx1, Sx2, Sx3, and Sx4 are changed. Therefore, the control unit 20 can recognize, with high accuracy, that the finger F approaches or touches the conductor portion 5 by monitoring the detection outputs of all the detection electrodes.

Fig. 7 illustrates a state in which the finger F approaches or touches the half electrode group Ya arranged on the operation surface 2a instead of touching the conductor portion 5.

As illustrated in Fig. 7, if the finger F approaches the second driving electrode Dp2, capacitive coupling CC7 is formed between the second driving electrode Dp2 and the finger F, and charge is deprived from the second driving electrode Dp2 to the finger F. As a result, the capacitive coupling CC6 between the second driving electrode Dp2 and the second detection electrode Sy2 is weakened, and the potential (detection output) of the second detection electrode Sy2 is changed. However, since the finger F is separated from the first driving electrode Dp1, the output change of the first detection electrode Sy1 is smaller than that of the second detection electrode Sy2. Further, the output change of the third detection electrode Sy3 of the half electrode group Yb is very weak, and the output change of the fourth detection electrode Sy4 is also weak.

Therefore, the control unit 20 can determine that the finger F approaches or touches the conductor portion 5 as illustrated in Fig. 2A if the outputs of all the detection electrodes are equally changed. When the output change of some of the detection electrodes is greater than the output change of the other detection electrodes, the control unit 20 can determine that the finger F approaches or touches the operation surface 2a instead of touching the conductor portion 5, as illustrated in Fig. 2B.

Here, it is assumed that a finger F1 further approaches the first driving electrode Dp1 and the second driving electrode Dp2 in the half electrode group Ya, and simultaneously, a finger F2 further approaches the third driving electrode Dp3 and the fourth driving electrode Dp4 in the half electrode group Yb, as illustrated in Fig. 3. In this case, charge of each of the driving electrodes Dp1, Dp2, Dp3, and Dp4 is deprived to the fingers F1 and F2, detection outputs of all of the first detection electrode Sy1, the second detection electrode Sy2, the third detection electrode sy3, and the fourth detection electrode Sy4 equally change in the scan time Ts1, and the change is the same as that when the finger F touches the conductor portion 5. However, in the X electrode group 12 illustrated in Fig. 4, since the fingers F1 and F2 are separated from the first driving electrode Dp1 and the third driving electrode Dp3, a change in the detection output of the first detection electrode Sx1 and the third detection electrode Sx3 is small, and the detection outputs of all the detection electrodes do not equally change.

Thus, the detection output in the scan time Ts1 and the scan time Ts2 when the fingers F1 and F2 approach the operation surface 2a becomes a detection output different from that in a state in which the finger touches the conductor portion 5. Thus, in the "operation identification mode", it is possible to identify a state in which the conductor portion 5 is gripped and operated by a finger as illustrated in Fig. 2A and a state in which a plurality of fingers F1 and F2 touch the operation surface 2a instead of touching the conductor portion 5 and the operation surface 2a is operated as illustrated in Fig. 2B, with high accuracy. Further, it is possible to reduce the radiation noise.

### Position identification mode

In the "operation identification mode", when it is determined that the finger F touches the operation surface 2a without the conductor portion 5 being operated as illustrated in Fig. 2B, a transition to "position identification mode" occurs.

In the "position identification mode", the respective
electrodes in the Y electrode group 11 are sequentially connected to the driving circuit 23 by the Y-side multiplexer 21, and the respective electrodes in the X electrode group 12 are sequentially connected to the detection circuit 24 by the X-side multiplexer 22. In this mode, coordinate detection by the capacitance sensor 10 can be performed, and a position on the operation surface 2a that the finger F touches can be detected. Further, when the plurality of fingers F1 and F2 touch the operation surface 2a as illustrated in Figs. 3 and 4, it is possible to perform position detection with so-called multi-touch to detect contact positions of the respective fingers.

It should be understood by those skilled in the art that various modifications, combinations, sub-combinations and alternations may occur depending on design requirements and other factors insofar as they are within the scope of the appended claims.

## Claims

1. An input device including an operation member (2) having an operation surface (2a) formed of an insulating material, a capacitance sensor (10) provided in the operation surface (2a),
wherein a conductor portion (5) is provided to surround at least a portion of the capacitance sensor (10),
**characterized in that**
a detection electrode (Sy1), and a driving electrode (Dp1) arranged on one side and a reverse phase driving electrode (Dn1) arranged on the other side with the detection electrode (Sy1) interposed therebetween are provided in the capacitance sensor (10), and the input device being configured to apply driving voltages of opposite phases to the driving electrode (Dp1) and the reverse phase driving electrode (Dn1), the driving electrode (Dp1) facing the conductor portion (5) in the entire length of the driving electrode (Dp1),
another driving electrode (Dp2) being provided in the capacitive sensor (10),
wherein the detection electrode (Sy1), the driving electrode (Dp1), the reverse phase driving electrode (Dn1) and the other driving electrode (Dp2) extend in the same direction, and are arranged in an order of the driving electrode (Dp1), the detection electrode (Sy1), the reverse phase driving electrode (Dn1), and the other driving electrode (Dp2) toward a direction away from a position close to the conductor portion (5) in an arrangement direction perpendicular to the direction in which the respective electrodes extend, and
driving voltages of the same phase are applied to the other driving electrode (Dp2) and the driving electrode (Dp1),
the conductor portion (5) is provided such that it surrounds at least a portion of the capacitance sensor (10) and
the input device is configured to determine that a hand approaches or touches the conductor portion (5) according to an output change of the detection electrode (Sy1).

2. The input device according to claim 1,
wherein the other driving electrode (Dp2) includes an end portion in a longitudinal direction facing the conductor portion (5).

3. The input device according to any one of claims 1 or 2,
wherein a plurality of sets of the driving electrode (Dp1), the detection electrode (Sy1) the reverse phase driving electrode (Dn1) and the other driving electrode (Dp2) are provided in the operation surface (2a), and the respective driving electrodes face the conductor portion (5).

4. The input device according to claim 3,
wherein, when there is the same output change in the plurality of detection electrodes (Sy1, Sy2, Sy3, Sy4), it is determined that the hand approaches or touches the conductor portion (5), and
when there is an output change in some of the plurality of detection electrodes (Sy1, Sy2, Sy3, Sy4), it is determined that the hand approaches or touches the operation surface (2a).

5. The input device according to any of claims 1 to 4,
wherein, in the arrangement direction, the driving electrode (Dp1), the detection eletrode (Sy1), and the reverse phase driving electrode (Dn1) are arranged symmetrically with respect to a center of the operation surface (2a).

6. The input device according to any of claims 1 to 5,
wherein a Y electrode group in which the driving electrode (Dp1), the detection electrode (Sy1), the reverse phase driving electrode (Dn1), and the other driving electrode (Dp2) are arranged toward the arrangement direction, and an X electrode group in which the driving electrode (Dp1) the detection electrode (Sx1), the reverse phase driving electrode (Dn1) and the other driving electrode (Dp2) are arranged toward a direction perpendicular to the arrangement direction are provided in the operation surface (2a).

## Patentansprüche

1. Eingabevorrichtung mit einem Betätigungselement (2), das eine Betätigungsfläche (2a) aufweist, die aus einem isolierenden Material gebildet ist, und mit einem Kapazitätssensor (10), der in der Betätigungsfläche (2a) vorgesehen ist,
wobei ein Leiterbereich (5) derart vorgesehen ist, dass er zumindest einen Bereich des Kapazitätssensors (10) umgibt,
**dadurch gekennzeichnet,**
**dass** eine Erfassungselektrode (Sy1) und eine Ansteuerelektrode (Dp1), die auf einer Seite angeordnet ist, und eine Umkehrphasen-Ansteuerelektrode (Dn1), die unter Zwischenanordnung der Erfassungselektrode (Sy1) auf der anderen Seite angeordnet ist, in dem Kapazitätssensor (10) vorgesehen sind, und wobei die Eingabevorrichtung dazu ausgebildet ist, Ansteuerspannungen mit entgegengesetzten Phasen an die Ansteuerelektrode (Dp1) und die Umkehrphasen-Ansteuerelektrode (Dn1) anzulegen,
wobei die Ansteuerelektrode (Dp1) dem Leiterbereich (5) über die gesamte Länge der Ansteuerelektrode (Dp1) zugewandt ist,
wobei eine weitere Ansteuerelektrode (Dp2) in dem Kapazitätssensor (10) vorgesehen ist,
wobei sich die Erfassungselektrode (Sy1), die Ansteuerelektrode (Dp1), die Umkehrphasen-Ansteuerelektrode (Dn1) und die weitere Ansteuerelektrode (Dp2) in der gleichen Richtung erstrecken und in einer Reihenfolge von Ansteuerelektrode (Dp1), Erfassungselektrode (Sy1), Umkehrphasen-Ansteuerelektrode (Dn1) sowie weitere Ansteuerelektrode (Dp2) in Richtung von einer Position in der Nähe des Leiterbereichs (5) weg in einer Anordnungsrichtung angeordnet sind, die rechtwinklig zu der Richtung ist, in der sich die jeweiligen Elektroden erstrecken, und
wobei Ansteuerspannungen mit der gleichen Phase an die weitere Ansteuerelektrode (Dp2) und die Ansteuerelektrode (Dp1) angelegt werden,
wobei der Leiterbereich (5) derart vorgesehen ist, dass er zumindest einen Bereich des Kapazitätssensors (10) umgibt, und
wobei die Eingabevorrichtung dazu ausgebildet ist, die Feststellung, dass sich eine Hand dem Leiterbereich (5) nähert oder diesen berührt, in Abhängigkeit von einer Ausgangsänderung der Erfassungselektrode (Sy1) zu treffen.

2. Eingabevorrichtung nach Anspruch 1,
wobei die weitere Ansteuerelektrode (Dp2) einen Endbereich in einer Längsrichtung aufweist, der dem Leiterbereich (5) zugewandt ist.

3. Eingabevorrichtung nach einem der Ansprüche 1 oder 2,
wobei eine Mehrzahl von Sätzen aus der Ansteuerelektrode (Dp1), der Erfassungselektrode (Sy1), der Umkehrphasen-Ansteuerelektrode (Dn1) und der weiteren Ansteuerelektrode (Dp2) in der Betätigungsfläche (2a) vorgesehen sind und die jeweiligen Ansteuerelektroden dem Leiterbereich (5) zugewandt sind.

4. Eingabevorrichtung nach Anspruch 3,
wobei dann, wenn die gleiche Ausgangsänderung bei der Mehrzahl von Erfassungselektroden (Sy1, Sy2, Sy3, Sy4) vorliegt, die Feststellung getroffen wird, dass sich die Hand dem Leiterbereich (5) nähert oder diesen berührt, und dann, wenn eine Ausgangsänderung bei einigen der Mehrzahl von Erfassungselektroden (Sy1, Sy2, Sy3, Sy4) vorliegt, die Feststellung getroffen wird, dass sich die Hand der Betätigungsfläche (2a) nähert oder diese berührt.

5. Eingabevorrichtung nach einem der Ansprüche 1 bis 4,
wobei in der Anordnungsrichtung die Ansteuerelektrode (Dp1), die Erfassungselektrode (Sy1) und die Umkehrphasen-Ansteuerelektrode (Dn1) symmetrisch in Bezug auf ein Zentrum der Betätigungsfläche (2a) angeordnet sind.

6. Eingabevorrichtung nach einem der Ansprüche 1 bis 5,
wobei eine Y-Elektrodengruppe, in der die Ansteuerelektrode (Dp1), die Erfassungselektrode (Sy1), die Umkehrphasen-Ansteuerelektrode (Dn1) und die weitere Ansteuerelektrode (Dp2) in der Anordnungsrichtung angeordnet sind, und eine X-Elektrodengruppe, in der die Ansteuerelektrode (Dp1), die Erfassungselektrode (Sx1), die Umkehrphasen-Ansteuerelektrode (Dn1) und die weitere Ansteuerelektrode (Dp2) in einer Richtung rechtwinklig zu der Anordnungsrichtung angeordnet sind, in der Betätigungsfläche (2a) vorgesehen sind.

## Revendications

1. Dispositif d'entrée comprenant un élément opérationnel (2) possédant une surface opérationnelle (2a) réalisée à partir d'un matériau isolant, un détecteur de capacité (10) prévu dans la surface opérationnelle (2a) ;
dans lequel une portion conductrice (5) est prévue pour entourer au moins une portion du détecteur de capacité (10) ;
**caractérisé en ce que**
une électrode de détection (Sy1), ainsi qu'une électrode d'entraînement (Dp1) disposée d'un côté et une électrode d'entraînement en phase inverse (Dn1) disposée de l'autre côté, l'électrode de détection (Sy1) venant s'intercaler entre les deux, sont prévues dans le détecteur de capacité (10), et le dispositif d'entrée étant configuré pour appliquer des tensions d'entraînement de phases opposées sur l'électrode d'entraînement (Dp1) et électrode d'entraînement en phase inverse (Dn1), l'électrode d'entraînement (Dp1) faisant face à la portion conductrice (5) sur toute la longueur de l'électrode d'entraînement (Dp1), une autre électrode d'entraînement (Dp2) étant prévue dans le détecteur de capacité (10) ;
dans lequel l'électrode de détection (Sy1), l'électrode d'entraînement (Dp1), l'électrode d'entraînement en phase inverse (Dn1) et l'autre électrode d'entraînement (Dp2) s'étendent dans la même direction et sont disposées dans un ordre dans lequel l'électrode d'entraînement (Dp1), l'électrode de détection (Sy1), l'électrode d'entraînement en phase inverse (Dn1) et l'autre électrode d'entraînement (Dp2) s'étendent dans une direction qui s'éloigne d'une position proche de la portion conductrice (5) dans un une direction d'arrangement perpendiculaire à la direction dans laquelle s'étendent les électrodes respectives ; et
des tensions d'entraînement de la même phase sont appliquées sur l'autre électrode d'entraînement (Dp2) et l'électrode d'entraînement (Dp1) ;
la portion conductrice (5) est prévue d'une manière telle qu'elle entoure au moins une portion du détecteur de capacité (10) ; et
le dispositif d'entrée est configuré pour déterminer le fait qu'une main s'approche de la portion conductrice (5) ou touche cette dernière en fonction d'un changement de sortie de l'électrode de détection (Sy1).

2. Dispositif d'entrée selon la revendication 1, dans lequel l'autre électrode d'entraînement (Dp2) englobe une portion terminale dans une direction longitudinale faisant face à la portion conductrice (5).

3. Dispositif d'entrée selon l'une quelconque des revendications 1 ou 2, dans lequel un certain nombre de jeux d'électrodes d'entraînement (Dp1), d'électrodes de détection (Sy1), d'électrodes d'entraînement en phase inverse (Dn1) et de l'autre électrode d'entraînement (Dp2) sont prévus dans la surface opérationnelle (2a), et les électrodes d'entraînement respectives font face à la portion conductrice (5).

4. Dispositif d'entrée selon la revendication 3,
dans lequel, en présence du même changement de sortie dans lesdites plusieurs électrodes de détection (Sy1, Sy2, Sy3, Sy4), on détermine que la main s'approche de la portion conductrice (5) ou touche celle-ci ; et
dans lequel, en présence du même changement de sortie dans un certain nombre desdites plusieurs électrodes de détection (Sy1, Sy2, Sy3, Sy4), on détermine que la main s'approche de la surface opérationnelle (2a) ou touche celle-ci.

5. Dispositif d'entrée selon l'une quelconque des revendications 1 à 4,
dans lequel, dans la direction d'arrangement, l'électrode d'entraînement (Dp1), l'électrode de détection (Sy1) et l'électrode d'entraînement en phase inverse (Dn1) sont disposées en symétrie par rapport au centre de la surface opérationnelle (2a).

6. Dispositif d'entrée selon l'une quelconque des revendications 1 à 5,
dans lequel un groupe d'électrodes Y dans lequel l'électrode d'entraînement (Dp1), l'électrode de détection (Sy1), l'électrode d'entraînement en phase inverse (Dn1) et l'autre électrode d'entraînement (Dp2) sont disposées dans la direction d'arrangement, et un groupe d'électrodes X dans lequel l'électrode d'entraînement (Dp1), l'électrode de détection (Sx1), l'électrode d'entraînement en phase inverse (Dn1) et l'autre électrode d'entraînement (Dp2) sont disposées dans une direction perpendiculaire à la direction d'arrangement, sont prévues dans la surface opérationnelle (2a).
